Europäisches Patentamt

European Patent Office

Office européen des brevets

(11) Veröffentlichungsnummer: **0 334 074**
A2

## (12) EUROPÄISCHE PATENTANMELDUNG

(21) Anmeldenummer: 89103716.0

(22) Anmeldetag: 03.03.89

(51) Int. Cl.4: **B29C 41/08 , B29C 41/46**

(30) Priorität: 23.03.88 DE 3809826

(43) Veröffentlichungstag der Anmeldung:
27.09.89 Patentblatt 89/39

(84) Benannte Vertragsstaaten:
DE ES FR GB IT SE

(71) Anmelder: Krauss-Maffei Aktiengesellschaft
Krauss-Maffei-Strasse 2
D-8000 München 50(DE)

(72) Erfinder: Bauer, Adolf, Ing. (grad.)
Heideweg 24 b
D-8037 Olching(DE)
Erfinder: Wagner, Peter, Dipl.-Ing. (FH)
Josef Lechenbauer-Strasse 9
D-8061 Weichs(DE)

(54) Verfahren und Vorrichtung zur Herstellung von Kunststoff-Formfolien.

(57) Bei einer Vorrichtung zum Herstellen von Kunststoff-Formfolien wird ein Formwerkzeug aufgeheizt und mit einem, fluiden Thermoplast-Kunststoff enthaltenden Behälter verbunden, worauf nach einer biaxialen Drehung des Formwerkzeugs und des Behälters auf der Oberfläche des aufgeheizten Formwerkzeugs eine Schicht aus Kunststoff aufschmilzt, die nach dem Abkühlen des Formwerkzeugs als Kunststoff-Formfolie entnommen wird. Zur Reduzierung des Energie- und Zeitaufwandes wird das Formwerkzeug mittels Heizstrahlern aufgeheizt.

Fig. 1

EP 0 334 074 A2

## Verfahren und Vorrichtung zum Herstellen von Kunststoff-Formfolien

Die Erfindung betrifft ein Verfahren und eine Vorrichtung zum Herstellen von Kunststoff-Formfolien gemäß Oberbegriff des Anspruchs 1

Bei den bekannten Vorrichtungen dieser Art wird das Formwerkzeug in einer Heizstation mit heißer Umluft beaufschlagt und nach Erreichen der erforderlichen Betriebtemperatur der nächsten Betriebsstation, der Beschickungsstation zugeführt, in der das Formwerkzeug an einen, den fluiden Thermoplast-Kunststoff enthaltenden Behälter angekoppelt wird.

Die Beheizung des Formwerkzeugs mit heißer Umluft erfordert einen großen Energie- und Zeitaufwand, da neben den beträchtlichen Luftmengen und dem Formwerkzeug ständig auch zugehörige Halterungselemente aufgeheizt werden müssen. Die Beheizung mit Umluft hat darüber hinaus den Nachteil, daß Rückstandspartikel von der im vorangegangenen Arbeitsschritt vom abgekühlten Formwerkzeug getrennten Kunststoff-Formfolie in die Umluft gelangen und sich auf der formgegebenen Oberfläche des Formwerkzeugs wieder absetzen können.

Der Erfindung liegt die Aufgabe zugrunde, eine Vorrichtung der genannten Art so auszubilden, daß bei geringstmöglichem Risiko einer Verschmutzung der Formoberfläche durch Rückstandspartikel der Zeit- und Energieaufwand zur Beheizung des Formwerkzeugs vermindert wird.

Die Lösung der Aufgabe ist in Anspruch 1 angegeben. Die Unteransprüche geben weitere vorteilhafte Maßnahmen und Ausgestaltungen der Erfindung an.

Durch die Verwendung von Heizstrahlern kann die Heizenergie zum einen nur auf die Teile gerichtet werden, die erhitzt werden müssen, zum anderen kann die Heizenergie von in einem Heizstrahlerfeld angeordneten Einzelstrahlern zur Erzielung einer schnellen und gleichmäßigen Erwärmung der Oberfläche des Formwerkzeugs unterschiedlich dosiert werden. Dies ist insbesondere bei Formwerkzeugen mit unterschiedlicher Dicke von Vorteil.

Eine Ausführungsform der Erfindung wird anhand der Zeichnung näher erläutert. Es zeigen:

Fig. 1 die Seitenansicht einer Formträgereinheit in der Strahlerheizstation mit einem Formwerkzeug in teilweiser Schnittdarstellung und mit an das Formwerkzeug herangefahrenen Heizstrahlerfeldern,

Fig. 2 die Formträgereinheit in der Beschichtungsstation mit angekoppeltem Pulverbehälter und noch geöffneter Nachglätthaube,

Fig. 3 die Formträgereinheit mit geschlossener Nachglätthaube und Darstellung der Drehachsen um die das Formwerkzeug drehbar ist,

Fig. 4 die Formträgereinheit mit geschlossener Nachglätthaube in der Kühlstation und,

Fig. 5 die Draufsicht auf die vereinfacht dargestellte Formträgereinheit mit einem Formwerkzeug in der der Strahlerheizstation nachgeordneten Bearbeitungsstation.

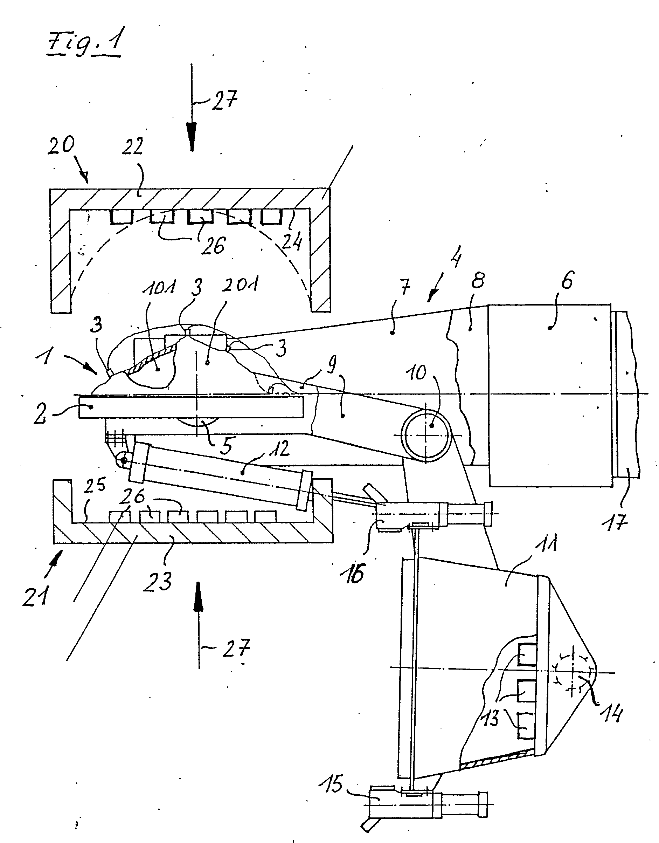

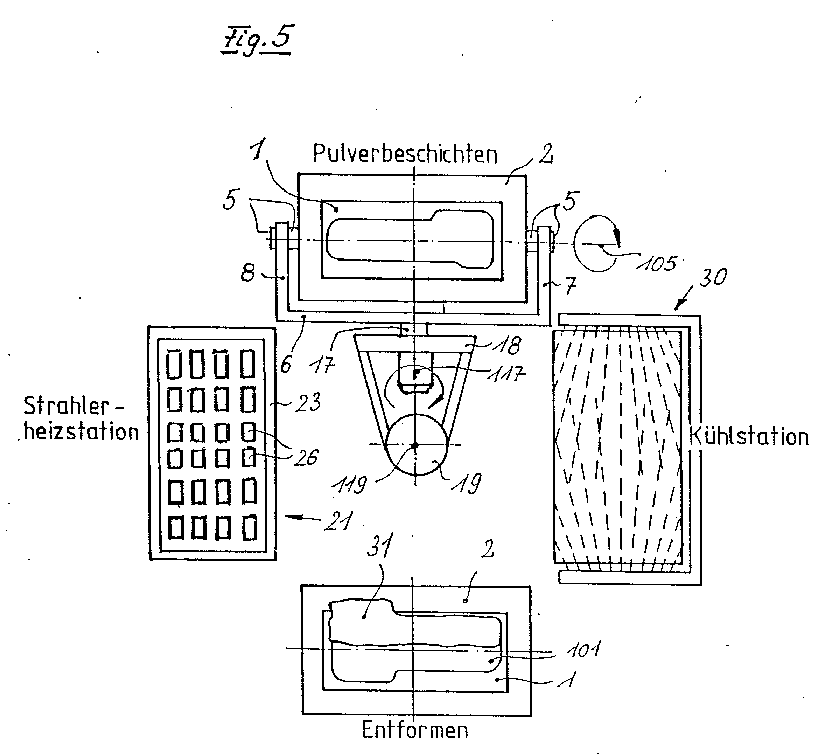

Die Fig. 1 zeigt eine Formträgereinheit mit einem aus einer Galvanoschale bestehenden und teilweise geschnitten dargestellten Formwerkzeug 1, das in einer Halterung 2 angeordnet ist und eine formgebende Oberfläche 101 und eine nichtformgebende Oberfläche 201 aufweist. Am Formwerkzeug ist eine Anzahl von Temperaturmeßfühlern 3 angeordnet. Die Halterung 2 wird von einem gabelartigen Haltebügel 4 umfaßt und ist an diesem an zwei Drehgelenken 5 angelenkt. Der Haltebügel 4 besteht aus einem Querarm 6 und zwei Gelenkträgern 7 und 8 (Fig. 5), von denen in den Fig. 1 bis 4 der Gelenkträger 7 vollständig und der Gelenkträger 8 nur in einem Teilstück dargestellt sind.

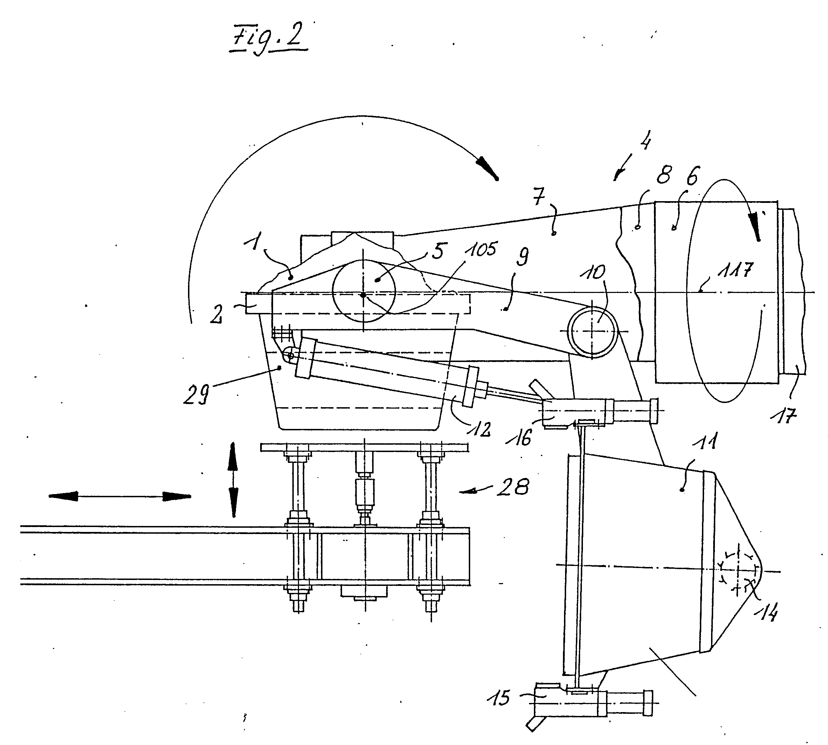

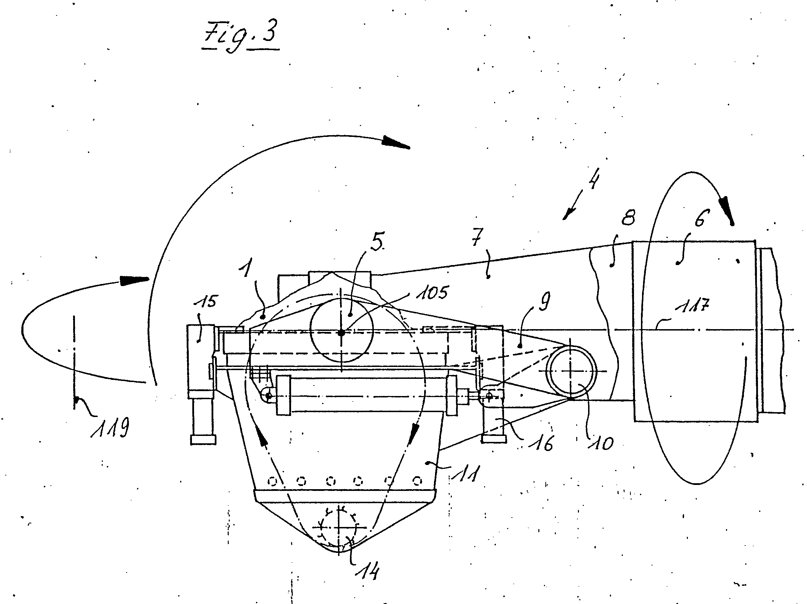

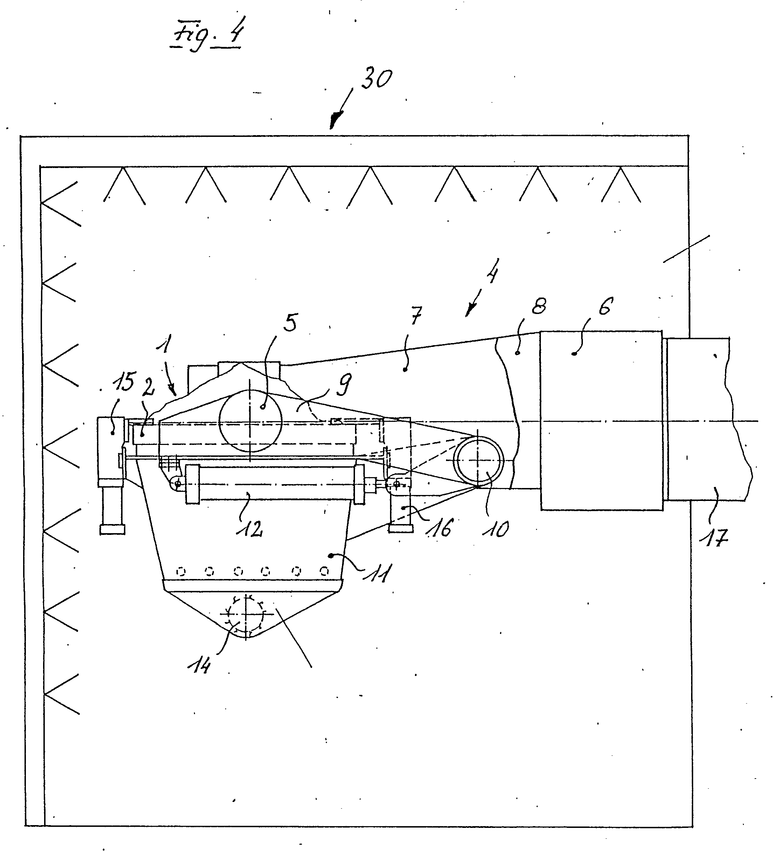

An der Halterung 2 ist ferner ein Halterahmen 9 angeordnet, an dem mittels eines Gelenks 10 eine Nachglätthaube 11 befestigt ist, die durch einen Stellzylinder 12 in eine offene Stellung gemäß der Darstellung nach Fig. 1 und 2 und in eine geschlossene Stellung gemäß der Darstellung nach Fig. 3 und 4 schwenkbar ist.

Im Bodenbereich der Nachglätthaube 11 sind Strahlerelemente 13 sowie ein Gebläse 14 angeordnet, mit dem im Inneren der Nachglätthaube 11 eine Zirkulationsströmung erzeugbar ist. An den oberen Randbereichen sind an der Nachglätthaube 11 hydraulisch betätigbare Verriegelungselemente 15 und 16 angeordnet mit denen die Nachglätthaube 11 in geschlossener Stellung (Fig. 3 und 4) mit der Halterung 2 verriegelbar ist.

Der Querarm 6 des Haltebügels 4 ist an einer Welle 17 befestigt, die in einem Träger 18 und in einer Königswelle 19 drehbar gelagert ist (Fig. 5).

Das Formwerkzeug 1 ist bei geschlossener Nachglätthaube 11 im Drehgelenk 5 um eine erste Drehachse 105 und mittels der Welle 17 um eine zweite Drehachse 117 drehbar. Die gesamte Formträgereinheit ist mit der Königswelle 19 um die Schwenkachse 119 in die bestimmten Bearbeitungsstationen schwenkbar.

In der ersten Bearbeitungsstation, der Strahlerheizstation befinden sich zwei Heizstrahlerfelder 20 und 21, die jeweils aus einem offenen Behälter 22 und 23 bestehen, auf dessen Bodenplatte 24 und 25 eine Anzahl von Einzelstrahlern 26 angeordnet sind.

Im Betrieb (Fig. 1) werden bei geöffneter Nachglätthaube 11 die Heizstrahlerfelder 20 und 21 in Richtung der Pfeile 27 herangefahren, so daß die Einzelstrahler 26 des oberen Heizstrahlerfeldes 20 auf die nichtformgebende Oberfläche 201 und die Einzelstrahler 26 des unteren Heizstrahlerfeldes 21 auf die formgebende Oberfläche 101 des Formwerkzeugs 1 gerichtet sind.

In einer bevorzugten Ausführungsform der Erfindung kann dabei die Heizleistung der Einzelstrahler 26 nach Maßgabe der Temperaturmeßwerte der Oberflächenbereiche sowohl derformgebenden als auch der nichtformgebenden Oberfläche 101 und 201 eingestellt werden.

Die Temperaturmeßwerte können durch einzeln verteilte Temperaturfühler 3 oder thermographische Verfahren, beispielsweise mittels eines Wärmebildgerätes (nicht dargestellt) ermittelt werden. Schließlich kann die erforderliche Heizleistung der Einzelstrahler 26 auch durch Versuche festgestellt werden, bei denen die Heizleistungen solange variiert werden bis sich die gewünschte gleichförmige Erwärmung des Formwerkzeugs 1 eingestellt.

Nach der Erwärmung des Formwerkzeugs 1 in der Strahlerheizstation werden die Heizstrahlerfelder 20 und 21 entgegen der Richtung der Pfeile 27 auseinandergefahren, worauf die Formträgereinheit in die nächste Bearbeitungsstation, die Pulverbeschichtungsstation, geschwenkt wird. Dabei wird an das geöffnete Formwerkzeug 1 mittels einer Zuführeinrichtung 28 (Fig. 2) ein Pulverbehälter 29 angedockt, der durch nachfolgendes Schließen der Nachglätthaube 11 gegen das Formwerkzeug 1 gedrückt und in geschlossener Stellung gehalten wird.

Im weiteren wird der Pulverbehälter 29 nach erfolgter Rotation des geschlossenen Formwerkzeugs 1 um die Drehachsen 105 und 117 wieder entfernt, worauf nach erneuter Schließung der Nachglätthaube 11 das Nachglätten erfolgt, nach dessen Beendigung das Formwerkzeug 1 mit der geschlossenen Nachglätthaube 11 in die Kühlstation 30 geschwenkt wird.

Vorteilhafterweise wird in Bearbeitungsphasen, wie z.B. dem Beschichten des aufgeheizten Formwerkzeugs 1 durch aufschmelzendes Kunststoffpulver, dem Nachglätten der Rückseite der aufgeschmolzenen Kunststoffschicht mittels der in der Nachglätthaube 11 angeordneten Strahlerelemente 13 und dem Abkühlen des Formwerkzeugs in der Kühlstation 30 vor der Entnahme der fertigen Kunststoff-Formfolie 31, die Zeitdauer dieser Phasen in Abhängigkeit der Temperaturmeßwerte mindestens eines Temperaturfühlers 3 bestimmt. Damit kann der Zeit- und Energieaufwand reduziert werden, da sichergestellt werden kann, daß die vorgenannten Bearbeitungsphasen nicht länger als notwendig dauern.

## Ansprüche

1. Verfahren zum Herstellen von Kunststoff-Formfolien mittels eines Formwerkzeugs, das in einer Heizstation erwärmt, in einer Beschickungsstation mit fluidem, auf der Formoberfläche des Formwerkzeugs aufschmelzbarem Thermoplast-Kunststoff beschichtet und in einer Entformstation von der auf der Formoberfläche des abgekühlten Formwerkzeugs gebildeten Kunststoff-Formfolie getrennt wird, **dadurch gekennzeichnet,** daß das Formwerkzeug (1) in der Heizstation durch Strahlung erwärmt wird.

2. Verfahren nach Anspruch 1, **dadurch gekennzeichnet,** daß die Strahlung durch eine Anzahl von Einzelstrahlern (26) erzeugt wird, die zu mindestens einem Heizstrahlerfeld (20, 21) zusammengefaßt sind.

3. Verfahren nach Anspruch 1 und 2, **dadurch gekennzeichnet,** daß die Strahlungsleistung eines oder mehrerer Einzelstrahler (26) nach Maßgabe von Temperaturmeßwerten der Oberflächenbereiche des Formwerkzeugs (1) bestimmt wird.

4. Verfahren nach Anspruch 2, **dadurch gekennzeichnet,** daß der Abstand jeweils eines oder mehrerer Einzelstrahler (26) zur Oberfläche des Formwerkzeugs (1) nach Maßgabe von Temperaturmeßwerten der Oberflächenbereiche des Formwerkzeugs (1) bestimmt wird.

5. Vorrichtung zur Durchführung des Verfahrens nach einem der vorangehenden Ansprüche, **dadurch gekennzeichnet,** daß das Heizstrahlerfeld (20, 21) aus einem offenen Behälter (22, 23) besteht, auf dessen Bodenplatte (24, 25) die Einzelstrahler (26) angeordnet sind.

6. Vorrichtung nach Anspruch 5, **dadurch gekennzeichnet,** daß mindestens ein Heizstrahlerfeld (20, 21) mit Antriebseinrichtungen versehen ist, mit denen das Heizstrahlerfeld (20, 21) zum Formwerkzeug (1) bewegbar ist.

7. Vorrichtung nach Anspruch 6, **dadurch gekennzeichnet,** daß dem Formwerkzeug (1) sowohl seiner formgebenden Oberfläche (101) als auch seiner nichtformgebenden Oberfläche (201) ein Heizstrahlerfeld (20, 21) zugeordnet ist.

8. Vorrichtung nach einem der vorangehenden Ansprüche 5 bis 7, **dadurch gekennzeichnet,** daß die Temperaturmeßwerte von auf der Oberfläche des Formwerkzeugs (1) angeordneten Temperaturfühlern (3) erzeugbar sind.

9. Vorrichtung nach einem der vorangehenden Ansprüche 5 bis 8, **dadurch gekennzeichnet,** daß die Temperaturmeßwerte von einem die Temperaturverteilung der Oberfläche des Formwerkzeugs (1) darstellenden Wärmebildgerätes erzeugbar sind.

10. Vorrichtung nach Anspruch 8, **dadurch gekennzeichnet,** daß die Zeitdauer von an den Aufheizvorgang für das Formwerkzeug anschließenden Bearbeitungsphasen, in Abhängigkeit der Temperaturmeßwerte mindestens eines Temperaturfühlers (3) bestimmbar ist.

EP 0 334 074 A2

**Fig. 1**

Krauss-Maffei AG
8000 München 50
TK 285 ℮

TK 285 a

_Fig. 2_

Krauss-Maffei AG
8000 München 50
TK 285 a

*Fig.3*

Krauss-Maffei AG
8000 München 50
TK 285 a

1K 285 i

_Fig. 4_

30

15  2  1  5  7  4  8  6

9  12  16  10  11  17  14

Krauss-Maffei AG
8000 München 50
TK 285 a

_Fig.5_

Pulverbeschichten

Strahlerheizstation

Kühlstation

Entformen

Krauss-Maffei AG
8000 München 50
TK 285 a